# EUROPÄISCHE PATENTSCHRIFT

(11) **EP 0 402 721 B1**
(45) Veröffentlichungstag und Bekanntmachung des Hinweises auf die Patenterteilung: **17.11.1994**
(21) Anmeldenummer: 90110516.3
(22) Anmeldetag: 02.06.1990
(51) Int. Cl.: C08G 65/44

(54) **Verfahren zur Herstellung von Polyphenylenether durch oxidative Kupplungsreaktion in Lösung**
Process for producing polyphenylenether by oxidative coupling reaction in solution
Procédé pour la production de polyphénylèneéther par couplage oxidant en solution

(30) Priorität: 13.06.1989 DE 3919229
(43) Veröffentlichungstag der Anmeldung: 19.12.1990
(73) Patentinhaber: BASF Aktiengesellschaft, 67063 Ludwigshafen (DE)
(72) Erfinder: Leber, Ludger, Dr., D-6701 Dannstadt-Schauernheim (DE); Brandt, Hermann, Dr., Fort Mill, South Carolina, 29715 (US); Ostermayer, Bertram, Dr., D-6900 Heidelberg (DE); Fischer, Hermann, Dr., D-6703 Limburgerhof (DE); Gausepohl, Hermann, Dr., D-6704 Mutterstadt (DE)

(56) Entgegenhaltungen:
- EP-A- 0 103 154
- EP-A- 0 179 314
- EP-A- 0 182 206
- DE-A- 2 126 434

## Beschreibung

Die vorliegende Erfindung betrifft ein Verfahren zur Herstellung von Polyphenylenether aus einwertigen Phenolen, die in den beiden o-Stellungen und gegebenenfalls in m-Position, nicht aber in der p-Stellung Alkylsubstituenten aufweisen, durch oxidative Kupplungsreaktion in Lösung mit Sauerstoff bei Drucken zwischen 1 und 10 bar in Anwesenheit eines Katalysatorkomplexes und eines Lösungsmittels in wenigstens zwei Reaktionszonen.

Polyphenylenether und Verfahren zu ihrer Herstellung sind beispielsweise aus den US-Patentschriften 3 306 874 und 3 306 875 bekannt. Danach wird die Polymerisation durch oxidative Kupplung einwertiger Phenole in Rührreaktoren, die mit Kühlschlangen und Mantelkühlung sowie mit einem Gaseinleitungsrohr versehen sind, unter Vorlage des Katalysatorkomplexes aus Kupfersalzen und Aminen und der Phenole oder unter teilweisem oder vollständigem Zulauf des Katalysatorkomplexes und/oder der Phenole diskontinuierlich durchgeführt. Der Sauerstoff wird in konstanter Menge pro Zeiteinheit zudosiert.

Auf diesen Grundlagenpatenten bauen die später veröffentlichten Patentanmeldungen DE-A 3 410 386, EP-A 103 154, EP-A 182 206, EP-A 197 469 und EP-A 203 356 auf. Sie beschreiben Verfahren zur Herstellung von Polyphenylenethern durch oxidative Kupplung in zwei oder mehr Reaktionszonen, wobei zur Vermeidung von Nebenreaktionen die Reaktionstemperaturen in beiden Reaktionszonen unter 60°C gehalten werden.

Im Zuge der weiteren Entwicklung zeigte es sich jedoch, daß die so hergestellten Produkte, insbesondere wenn sie mit Styrolpolymerisaten bzw. weiteren Additiven verschnitten werden, nicht mehr den steigenden Anforderungen bei der Weiterverarbeitung genügen. So entstehen manchmal bei der thermoplastischen Verarbeitung durch Spritzguß oder Extrusion Formteile, die durch Ausschwitzen fleckige Oberflächen haben. Weiterhin kann es bei der Verarbeitung zu störenden Belägen in den Verarbeitungsmaschinen, insbesondere in den Formen oder in den Düsen oder engen Kanälen von Spritzgußmaschinen kommen. Die Verarbeitungsmaschinen müssen daher häufiger gereinigt werden, oder die Formmassen können nur mit besonderen Verarbeitungshilfsmitteln eingesetzt werden und sind daher nicht universell verwendbar.

Aus US-A 3 789 054 war bekannt, Polyphenylenether in zwei Reaktionszonen herzustellen. Es handelt sich um eine oxidative Kupplungsreaktion in einem speziell ausgesuchten Gemisch aus Lösungsmittel und Fällungsmittel. Dieses Gemisch muß so ausgewählt werden, daß der Polyphenylenether in der zweiten Reaktionszone aus dem Reaktionsgemisch ausfällt, um den Polyphenylenether in Form von bestimmten Teilchen zu erhalten. Dieses Verfahren hat den Nachteil, daß es auf ganz spezielle Gemische aus Lösungsmittel und Fällungsmittel beschränkt ist, die ihrerseits an das gewünschte Verfahrensprodukt angepaßt werden müssen. Es werden zwar Reaktionstemperaturen zwischen 0 und 100°C beschrieben, es wird jedoch keinerlei Hinweis auf die obengenannten Probleme gegeben, oder darauf, wie diese Probleme zu lösen wären.

Es bestand demgemäß die Aufgabe, ein Verfahren zur einfachen Herstellung von Polyphenylenether durch oxidative Kupplung in Lösung bereitzustellen, das ein reines Produkt mit guten mechanischen Eigenschaften liefert, welches gut verarbeitbar ist.

Demgemäß wurde ein Verfahren zur Herstellung von Polyphenylenether aus einwertigen Phenolen, die in den beiden o-Stellungen und gegebenenfalls in m-Position, nicht aber in der p-Stellung Alkylsubstituenten aufweisen, durch oxidative Kupplungsreaktion in Lösung mit Sauerstoff bei Drucken zwischen 1 und 10 bar in Anwesenheit eines Katalysatorkomplexes und eines Lösungsmittels in wenigstens zwei Reaktionszonen, dadurch gekennzeichnet, daß man in der ersten Reaktionszone bei Temperaturen zwischen 10 und 40°C und in der zweiten Reaktionszone zwischen 60 und 110°C arbeitet, gefunden.

Bevorzugte Ausführungsformen des Verfahrens sind den Unteransprüchen zu entnehmen.

Unter hochmolekularen Polyphenylenethern im Sinne der Erfindung werden die durch oxidative Kupplung von 2,6-Dialkyl- und/oder 2,3,6-Trialkylphenolen zu einer Kette alkylsubstituierter, in p-Stellung durch Sauerstoffatome etherartig gebundene Benzolringe verstanden. Die Polymeren weisen im allgemeinen Grenzviskositäten von 0,3 bis 1 dl/g, bevorzugt 0,5 bis 0,8 dl/g, gemessen in CHCl₃ bei 25°C, auf. Hochmolekulare Polyphenylenether sind aus US-A 3 661 848, US-A 3 219 625 oder US-A 3 378 505 bekannt.

Die zur Herstellung der hochmolekularen Polyphenylenether verwendeten einwertigen Phenole, die in den beiden o-Stellungen und gegebenenfalls in m-Position, nicht aber in der p-Stellung Alkylsubstituenten aufweisen, die maximal je 12 C-Atome haben können, sind übliche Phenole wie 2,6-Dimethylphenol, 2,6-Diethylphenol, 2-Methyl-6-ethylphenol, 2-Methyl-6-tertiärbutylphenol, 2-Methyl-6-propylphenol, 2,6-Dibutylphenol, 2,3,6-Trimethylphenol sowie Gemische dieser Phenole.

Bevorzugt wird das für die Polymerisation vorgesehene einwertige Phenol mit einem o-Kresol- und p-Kresol-Anteil von jeweils weniger als 0,1 Gew.% eingesetzt. Besonders bevorzugt wird ein einwertiges Phenol der oxidativen Kupplung unterzogen, bei dem Phenol, m-Kresol und mehrkernige Phenole zu weniger als 0,02 Gew.% in den Ausgangsstoffen enthalten sind.

Bei dem für die oxidative Kupplung verwendeten Katalysatorkomplex handelt es sich um eine Kombination aus einem oder mehreren Aminen, wie Dibutylamin, Diethylamin, N,N'-Di-tert.-butylethylendiamin, Picolin, Chinolin, Pyridinbasen, Triisopropylamin, Dimethylbutylamin, Dimethylisopropanolamin, Triethanolamin, Triisopropanolamin, Diisopropanolamin oder N-Butylimidazol mit einem Kupfersalz, wie Kupfer-I-Bromid, Kupfer-I-Chlorid, Kupfer-I-Jodid, Kupfer-II-Acetat, Kupfer-II-Propionat, Kupfer-II-Acetessigester oder Kupfer-II-Acetylacetonat.

Kupfer-I/II-halogenide können dabei auch aus Kupferoxid durch Umsetzung mit Halogenwasserstoff erzeugt werden.

Ein bevorzugter Bereich bei der Menge der eingesetzten Amine liegt üblicherweise bei 2,0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Die oxidative Kupplung kann auch in Gegenwart von Mn-Chelatkomplexen durchgeführt werden, wie dies beispielsweise in der DE-A 2 752 294 beschrieben ist. Vorzugsweise werden Mn-II-hydroxyoxim-Chelatkomplex verwendet.

Es werden Lösungsmittel oder Lösungsmittelgemische eingesetzt, aus denen der Polyphenylenether während der oxidativen Kupplungsreaktion nicht ausfällt. Üblicherweise wird als Lösungsmittel ein aromatischer C₇- bis C₁₀-Kohlenwasserstoff verwendet, der gegebenenfalls noch geringe Mengen eines Alkanols enthalten kann. Geeignete Kohlenwasserstoffe sind insbesondere Ethylbenzol, Xylol, Diethylbenzol oder deren Gemische, wobei vorzugsweise Ethylbenzol oder Toluol verwendet werden. Geeignete Alkanole sind bekannt, z.B. Ethanol und/oder Isopropanol. Die Lösungsmittel werden bevorzugt im Bereich von 1:1 bis 10:1 Gewichtsteile, bezogen auf das monomere Phenol, eingesetzt.

Darüber hinaus kann gemäß der US-A 3 544 515 die Reaktionsmischung einen Aktivator wie ein Diarylguanidin, ein Diarylformamidin oder Alkalimetall enthalten.

Bei dem Polymerisationsverfahren erfolgt die Umsetzung der einwertigen Phenole in zwei Reaktionszonen. Die erste besteht vorzugsweise aus einem Treibstrahlreaktor und einem Rührreaktor, die durch ein Förderaggregat und einen Wärmetauscher miteinander verbunden sind. Treibstrahlreaktoren sind bekannt, beispielsweise aus EP-A 88 670. Das Förderaggregat hat die Aufgabe, die für die Abführung der Reaktionswärme im Wärmetauscher notwendige Fördermenge bereitzustellen, und die für die Dispergierung der Gasphase in der ersten Reaktionszone erforderliche Dissipationsenergien einzutragen.

Das stündliche Umwälzvolumen liegt üblicherweise im Bereich des 5- bis 50-fachen, vorzugsweise des 10- bis 35-fachen des Gesamtvolumens der ersten Reaktionszone.

Als zweite Reaktionszone wird ein Rührkessel bevorzugt, der der ersten Zone nachgeschaltet ist. Es können noch weitere Reaktionszonen in Form von Rührkesseln, die gemeinsam mit der zweiten Reaktionszone auch eine Rührkesselkaskade bilden können, angeschlossen sein.

Eine zur Ausführung des Verfahrens gut geeignete Anlage ist in EP-A 182 206 beschrieben.

Bei dem erfindinngsgemäßen Polymerisationsverfahren werden im allgemeinen in der ersten Reaktionszone 60 bis 100 Mol% und der zweiten und gegebenenfalls den weiteren Reaktionszonen 0 bis 40 Mol% der stöchiometrisch erforderlichen Sauerstoffmenge zugeführt. Es hat sich als günstig erwiesen, den Sauerstoff, der der ersten Reaktionszone zugeführt wird, aufzuteilen, so daß 70 bis 100 % in den Treibstrahlreaktor und 0 bis 30 % in den Rührkessel eingebracht werden. Unter der stöchiometrisch erforderlichen Menge Sauerstoff ist die Menge zu verstehen, die benötigt wird, um Diphenole zu den gewünschten Polyphenylenethern zu kuppeln.

Der Sauerstoff kann den Reaktionszonen in reiner Form zugeführt werden. Es hat sich jedoch als günstig erwiesen, in die erste Reaktionszone reinen Sauerstoff und in die zweite und die folgenden Reaktionszonen ein Gasgemisch aus Stickstoff und Sauerstoff im Volumenverhältnis zwischen 100:1 bis 1:5, bevorzugt Luft einzuführen. Beim erfindungsgemäßen Verfahren wird die gesamte Reaktionslösung nach Erreichen eines Umsatzes von im allgemeinen mehr als 80, bevorzugt mehr als 90, insbesondere mehr als 98 Mol% des insgesamt stöchiometrisch benötigten Sauerstoffs von der ersten Reaktionszone in die zweite Reaktionszone und gegebenenfalls anschließend in weitere Reaktionszonen gefördert und dort bis zum Aufbau einer Grenzviskosität zwischen 0,3 dl/g und 1 dl/g weiterpolymerisiert.

Es wird vorteilhafterweise darauf geachtet, daß die freien Gasvolumina der Reaktionszonen bzw. der Abgasströme Zusammensetzungen haben, die außerhalb des Explosionsbereiches liegen. Explosionsbereiche von Gasgemischen sind dem Fachmann bekannt und beispielsweise nach DIN 51649 bestimmbar. Es hat sich als günstig erwiesen, die Sauerstoffkonzentrationen in den Gasvolumina bzw. in den Abgasleitungen zu messen und gegebenenfalls durch Einleiten von Inertgasen in die Reaktionszone bzw. die Abgasleitungen zu inertisieren.

Die oxidative Kupplung kann kontinuierlich oder diskontinuierlich ausgeführt werden. Sie kann dabei entweder unter Vorlage der gesamten Monomer-, Lösungsmittel- und Katalysatormenge oder unter Vorlage der gesamten Katalysatormenge zusammen mit einem Teil des Lösungsmittels und gegebenenfalls des Phenols unter Zulauf der restlichen Phenolmenge mit oder ohne Lösungsmittel durchgeführt werden.

Die Temperatur wird in der ersten Reaktionszone zwischen 10 und 40, insbesondere zwischen 25 und 30°C und in der zweiten Reaktionszone zwischen 60 und 110, bevorzugt 62 bis 85 und insbesondere 62 bis 78°C gehalten. Die Temperaturen in eventuell zugeschalteten weiteren Reaktionszonen können der Temperatur der zweiten Reaktionszone angeglichen werden. Es wird bei Drucken zwischen 1 und 10 bar, bevorzugt 1 bis 4 bar gearbeitet, wobei die Reaktionszonen gleiche oder unterschiedliche Drucke aufweisen können.

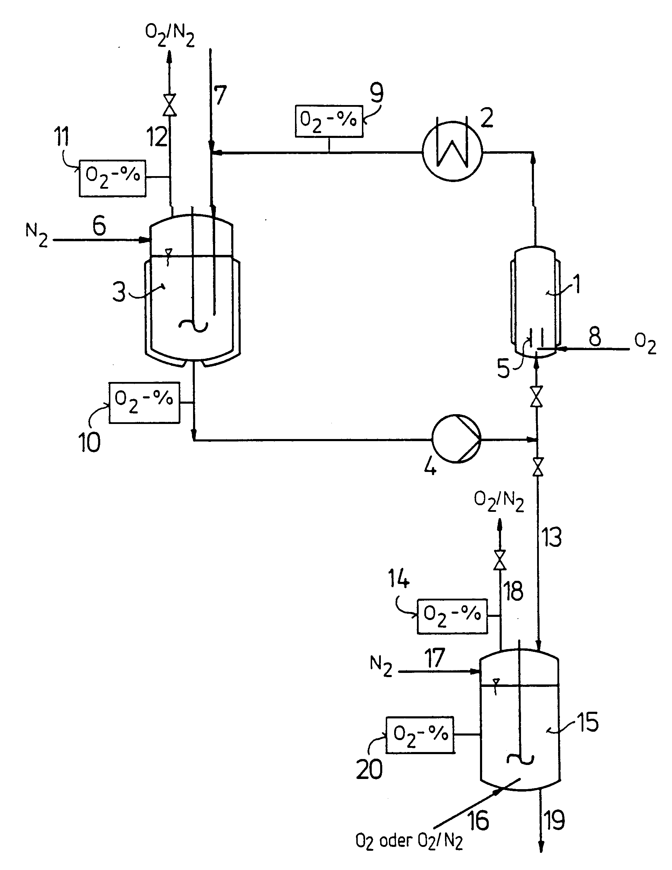

Eine besonders bevorzugte Ausführungsform der Erfindung wird nachfolgend unter Hinweis auf die Zeichnung anhand von Ausführungsbeispielen näher erläutert.

Nach der Zeichnung sind in einem Kreislaufsystem, das die erste Reaktionszone bildet, ein Treibstrahlreaktor (1), ein Wärmetauscher (2), ein Rührreaktor (3) und eine Kreiselpumpe (4) über Rohrleitungen miteinander verbunden. Im unteren Teil des Treibstrahlreaktors ist ein Impulsaustauschraum (5) angedeutet. Nach dem Inertisieren des Kreislaufsystems mit Stickstoff über die Zuleitung (6) wird das erforderliche Volumen des Lösungsmittels bei (7) so eingebracht, daß bis zu 90 % des nutzbaren Kreislaufvolumens gefüllt sind. Der Katalysatorkomplex wird nach Inbetriebnahme des Rührwerks des Rührreaktors (3) und der Kreiselpumpe (4) ebenfalls bei (7) zugeführt. Anschließend erfolgt die Dosierung der zu polymerisierenden Phenolmenge über denselben Zulaufstutzen (7) derart, daß die Zulaufzeit bis zu 90 % der insgesamt benötigten Reaktionszeit beträgt.

Mit (8) ist eine Einrichtung für die Zufuhr von Sauerstoff in den Treibstrahlreaktor (1) bezeichnet. Die Konzentration des gelösten Sauerstoffs ist bei (9) und (10) meßbar. Die Meßeinrichtung (11) erfaßt den Sauerstoffgehalt in der Abgasleitung (12). Bei Erreichen des gewünschten Umsatzes wird die Polymerlösung über eine Rohrleitung (13) der zweiten Reaktionszone zugeführt.

Diese umfaßt einen Rührreaktor (15), eine Einrichtung (16) für die Zufuhr von Sauerstoff oder Stickstoff/Sauerstoffgemisch sowie Rohrleitungen (17) für die Zufuhr von Stickstoff, (18) für die Ableitung des Abgases und (19) für den Austrag des Reaktionsproduktes. An die Abgasleitung (18) ist eine Meßeinrichtung (14) zur Bestimmung des Sauerstoffgehaltes angeschlossen. Eine weitere Meßeinrichtung (20) zur Bestimmung des in der Reaktionslösung gelösten Sauerstoffs ist mit dem Rührreaktor (15) verbunden.

Wenn die Konzentrationsverhältnisse von Sauerstoff zu brennbaren Gasen im Gasraum bzw. im Abgas der zweiten Reaktionszone außerhalb des Explosionsbereiches liegen, kann gegebenenfalls auf die Meßeinrichtungen (20) und (21) und die Stickstoffzuleitung (17) verzichtet werden.

Mit dem erfindungsgemäßen Verfahren lassen sich Polyphenylenether mit vorteilhaften Eigenschaften herstellen. Sie weisen auch in Abmischung mit anderen Polymeren beispielsweise gute Elastizität und ein hohes Haftvermögen an Glasfasern auf. Polymerblends, die den erfindungsgemäß hergestellten Polyphenylenether enthalten, lassen sich thermoplastisch zu Formkörpern mit klarer Oberfläche verarbeiten, wobei sich in der Verarbeitungsmaschine nur wenig Belag absetzt.

### Beispiele und Vergleichsversuche

1 Gew.-Teil CuBr wird mit 52 Gew.-Teilen Dibutylamin und 780 Gew.-Teilen Toluol unter N₂ in der ersten Reaktionszone vorgelegt. Bei einem Umwälzvolumen vom 30-fachen des Gesamtvolumens der ersten Reaktionszone und angepaßter Sauerstoffzufuhr wurden innerhalb von 60 Minuten 154 Gew.-Teile 2,6-Dimethylphenol bei (7) in den Rührkessel (3) der ersten Reaktionszone zudosiert. Die Sauerstoffzufuhr wurde so angepaßt, daß man außerhalb des Explosionsbereiches arbeitete.

Nach der in der Tabelle 1 angegebenen Zeit t wurde die Reaktionslösung in die zweite Reaktionszone gepumpt und mit Luft bis zum Erreichen der gewünschten Grenzviskosität [η] begast. Die Temperaturen, bei denen in der ersten und zweiten Reaktionszone gearbeitet wurde, sind in Tabelle 1 angegeben.

**Tabelle 1**

| Beispiel | Reaktionszeit nach Zulaufende i.d. 1. Zone t [min] | Temperatur in erster Zone [°C] | Temperatur in zweiter Zone [°C] | Grenzviskosität des Produktes [η] [CHCl₃, 25°C] |
|---|---|---|---|---|
| 1 | 20 | 25 | 61 | 0,51 |
| 2 | 20 | 25 | 70 | 0,50 |
| 3 | 10 | 40 | 61 | 0,57 |
| 4 | 10 | 40 | 70 | 0,52 |

| Vergleichsversuch | | | | |
|---|---|---|---|---|
| 1* | 20 | 25 | 25 | 0,53 |
| 2* | 10 | 40 | 40 | 0,53 |

Die Reaktionslösungen wurden durch Extraktion des Katalysators mit einer wäßrigen Lösung des Dinatriumsalzes der Ethylendiamintetraessigsäure und Abdestillieren des organischen Lösungsmittels aufgearbeitet. Jeweils 4,5 kg der erhaltenen Poly(2,6-dimethyl-1,4-phenylen)ether wurden mit 5,5 kg schlagfestem Polystyrol, 2,5 kg Glasfasern (Länge nach Einarbeitung zwischen 150 und 250 µm) bei 280°C in einem 2-Wellen-Extruder vermischt.

In Tabelle 2 sind die Eigenschaften zusammengefaßt. Die Glasfaserhaftung wurde visuell an rasterelektronenmikroskopischen Aufnahmen von Bruchflächen und die Klarheit der Oberfläche an Hand der Fleckigkeit der Oberflächen von Normspritzkörpern beurteilt.

**Tabelle 2**

| Beispiel | Glasfaserhaftung | Klarheit der Oberfläche |
|---|---|---|
| 1 | ++ | +++ |
| 2 | +++ | ++ |
| 3 | ++ | ++ |
| 4 | +++ | ++ |
| 1* | + | o |
| 2* | + | + |
| +++ sehr gut ++ gut + mäßig o schlecht | | |

## Patentansprüche

1. Verfahren zur Herstellung von Polyphenylenether aus einwertigen Phenolen, die in den beiden o-Stellungen und gegebenenfalls in m-Position, nicht aber in der p-Stellung Alkylsubstituenten aufweisen, durch oxidative Kupplungsreaktion in Lösung mit Sauerstoff bei Drucken zwischen 1 und 10 bar in Anwesenheit eines Katalysatorkomplexes und eines Lösungsmittels in wenigstens zwei Reaktionszonen, dadurch gekennzeichnet, daß man in der ersten Reaktionszone bei Temperaturen zwischen 10 und 40°C und in der zweiten Reaktionszone zwischen 60 und 110°C arbeitet.

2. Verfahren nach Anspruch 1, dadurch gekennzeichnet, daß man in der zweiten Reaktionszone zwischen 62 und 85°C arbeitet.

3. Verfahren nach Anspruch 1 oder 2, dadurch gekennzeichnet, daß in der ersten Reaktionszone 60 bis 100 % und in der zweiten Reaktionszone 0 bis 40 % des für die oxidative Kupplung stöchiometrisch erforderlichen Sauerstoffs eingebracht werden.

4. Verfahren nach einem der Ansprüche 1 bis 3, dadurch gekennzeichnet, daß man in die erste Reaktionszone mit Sauerstoff und in die zweite Reaktionszone mit einem Stickstoff/Sauerstoff-Gemisch einleitet, wobei das Volumenverhältnis von Stickstoff:Sauerstoff zwischen 100:1 und 1:5 liegt.

5. Verfahren nach einem der Ansprüche 1 bis 3, dadurch gekennzeichnet, daß man in die erste Reaktionszone mit Sauerstoff und in die zweite Reaktionszone mit Luft einleitet.

6. Verfahren nach mindestens einem der Ansprüche 1 bis 5, dadurch gekennzeichnet, daß die erste Reaktionszone aus einem Umwälzkreis besteht, der einen Treibstrahlreaktor, einen Rührreaktor, einen Wärmetauscher und ein Förderaggregat enthält.

7. Verfahren nach Anspruch 6, dadurch gekennzeichnet, daß das Reaktionsgemisch in der ersten Reaktionszone so umgewälzt wird, daß das Umwälzvolumen das 5- bis 50-fache des Gesamtvolumens der ersten Reaktionszone beträgt.

8. Verfahren nach mindestens einem der Ansprüche 1 bis 7, dadurch gekennzeichnet, daß man die oxidative Kupplungsreaktion in der ersten Reaktionszone bis zu einem Umsatz von mehr als 80 Mol% des insgesamt stöchiometrisch benötigten Sauerstoffs und in den folgenden Reaktionszonen bis zu Grenzviskositäten des Polymeren von 0,3 bis 1 dl/g, gemessen in Chloroform bei 25°C, durchführt.

## Claims

1. A process for the preparation of a polyphenylene ether from a monohydric phenol which has alkyl substituents in the two o-positions and, if desired, in the m-position but not in the p-position, by an oxidative coupling reaction in solution with oxygen at from 1 to 10 bar in the presence of a catalyst complex and of a solvent in at least two reaction zones, wherein a temperature of from 10 to 40°C is employed in the first reaction zone and a temperature of from 60 to 110°C is employed in the second reaction zone.

2. A process as claimed in claim 1, wherein a temperature of from 62 to 85°C is employed in the second reaction zone.

3. A process as claimed in claim 1 or 2, wherein from 60 to 100% of the stoichiometric amount of oxygen required for the oxidative coupling are introduced in the first reaction zone and from 0 to 40% thereof are introduced in the second reaction zone.

4. A process as claimed in any of claims 1 to 3, wherein oxygen is passed into the first reaction zone and a nitrogen/oxygen mixture is passed into the second reaction zone, the volume ratio of nitrogen to oxygen being from 100 : 1 to 1 : 5.

5. A process as claimed in any of claims 1 to 3, wherein oxygen is passed into the first reaction zone and air is passed into the second reaction zone.

6. A process as claimed in one or more of claims 1 to 5, wherein the first reaction zone consists of a circulation loop which contains a jet reactor, a stirred reactor, a heat exchanger and a conveying unit.

7. A process as claimed in claim 6, wherein the reaction mixture is circulated in the first reaction zone in such a way that the circulated volume is from 5 to 50 times the total volume of the first reaction zone.

8. A process as claimed in one or more of claims 1 to 7, wherein the oxidative coupling reaction is carried out in the first reaction zone to a conversion of more than 80 mol% of the total stoichiometric amount of oxygen required and in the subsequent reaction zones to limiting viscosity numbers of the polymer of from 0.3 to 1 dl/g, measured in chloroform at 25°C.

## Revendications

1. Procédé de préparation de poly(oxyphénylène) à partir de phénols monovalents qui comportent des substituants alkyle dans les deux positions ortho et éventuellement en position méta, mais non en position para, par réaction de couplage par voie d'oxydation en solution, avec de l'oxygène sous des pressions comprises entre 1 et 10 bar, en présence d'un complexe catalytique et d'un solvant, dans au moins deux zones de réaction, caractérisé en ce que l'on procède à des températures comprises, dans la première zone de réaction, entre 10 et 40°C et, dans la seconde zone de réaction, entre 60 et 110°C.

2. Procédé selon la revendication 1, caractérisé en ce que l'on procède entre 62 et 85°C dans la seconde zone de réaction.

3. Procédé selon la revendication 1 ou 2, caractérisé en ce qu'il est introduit, dans la première zone de réaction, 60 à 100% et, dans la seconde zone de réaction, 0 à 40% de l'oxygène nécessaire stoechiométriquement pour le couplage par voie d'oxydation.

4. Procédé selon l'une quelconque des revendications 1 à 3, caractérisé en ce qu'on déclenche la réaction, dans le première zone de réaction, avec de l'oxygène et, dans la seconde zone de réaction, avec un mélange azote/oxygène, le rapport volumique de l'azote à l'oxygène se situant entre 100:1 et 1:5.

5. Procédé selon l'une quelconque des revendications 1 à 3, caractérisé en ce qu'on déclenche la réaction, dans la première zone de réaction, avec de l'oxygène et, dans la seconde zone de réaction, avec de l'air.

6. Procédé selon l'une quelconque des revendications 1 à 5, caractérisé en ce que la première zone de réaction est constituée par un circuit en boucle qui contient un réacteur à jet de propulsion, un réacteur à agitation, un échangeur de chaleur et un groupe de circulation.

7. Procédé selon la revendication 6, caractérisé en ce que le mélange réactionnel est mis en circulation dans la première zone de réaction de telle sorte que le volume circulant s'élève à 5-50 fois le volume total de la première zone de réaction.

8. Procédé selon l'une quelconque des revendications 1 à 7, caractérisé en ce qu'on conduit la réaction de couplage par voie d'oxydation, dans la première zone de réaction, jusqu'à un degré de transformation de plus de 80% en moles de l'oxygène nécessaire stoechiométriquement au total et, dans les zones de reaction suivantes, jusqu'à des viscosités limites du polymère de 0,3 à 1 dl/g, mesurées dans du chloroforme à 25°C.
